# EUROPEAN PATENT APPLICATION

(11) **EP 2 469 629 A2**
(43) Date of publication of application: **27.06.2012**
(21) Application number: 10808367.6
(22) Date of filing: 12.08.2010
(51) Int. Cl.: H01M 4/48, H01M 4/04, H01M 10/05

(54) **AMORPHOUS ANODE ACTIVE MATERIAL, PREPARATION METHOD OF ELECTRODE USING SAME, SECONDARY BATTERY CONTAINING SAME, AND HYBRID CAPACITOR**

(30) Priority: 13.08.2009 KR 20090074680
(71) Applicant: SNU R&DB Foundation, Gwanak-gu, Seoul 151-015 (KR)
(72) Inventor: KU, Jun-Hwan, Seoul 135-100 (KR); PARK, Kyung-Jin, Seoul 157-882 (KR); KIM, Ji-Sun, Seoul 151-069 (KR); RYU, Ji-Heon, Siheung-si Gyeonggi-do 429-754 (KR); OH, Seung-Mo, Anyang-si Gyeonggi-do 431-085 (KR)
(74) Representative: Keltie, David Arthur
(86) International application number: PCT/KR2010/005299
(87) International publication number: WO 2011/019218

(57) **Abstract**

The present invention relates to an amorphous anode active material, a preparation method of an electrode using the same, a secondary battery containing the same, and a hybrid capacitor, wherein the amorphous anode active material according to the present invention comprises at least one of a metal oxide or a metal phosphate, and the metal oxide or the metal phosphate is amorphous. The metal oxide has the form of MOₓ (0 < X ≤ 3), wherein M is at least one of molybdenum (Mo), vanadium (V), scandium (Sc), titanium (Ti), chromium (Cr), yttrium (Y), zirconium (Zr), niobium (Nb) and tungsten (W). The metal phosphate has the form of AₓB_{y}(PO₄) (0 ≤ x ≤ 2, 0 < y ≤ 2), wherein A is at least one of lithium (Li), sodium (Na) and potassium (K), and B is at least one of molybdenum (Mo), vanadium (V), scandium (Sc), titanium (Ti), chromium (Cr), yttrium (Y), zirconium (Zr), niobium (Nb) and tungsten (W). According to the present invention, the storage space of lithium, sodium, and the like and the diffusion velocity of ions thereof are increased by using an amorphous metal oxide or phosphate as an anode active material, thereby remarkably improving the capacity and velocity characteristics of a battery, the charged and discharged state of a finished battery is easily tracked or predicted because a charge/discharge voltage curve having a slope close to a straight line is shown, and compatibility with an anode of a lithium secondary battery, a sodium secondary battery and a hybrid capacitor is expected to be very high because an excellent cycle lifetime is shown.

## Description

### Technical Field

The present invention relates to an amorphous anode active material, preparation method of electrode using same, secondary battery containing same, and hybrid capacitor, and more particularly amorphous anode active material, preparation method of electrode using same, secondary battery containing same, and hybrid capacitor which is using amorphous metal oxide or amorphous metal phosphate as an anode active material and the storage space of lithium, sodium and the like and the diffusion velocity of ions are improved.

### Background Art

Graphite was the conventional anode material used for lithium secondary battery. However, as the market for secondary battery grows and the demand for various power applications increases, graphite can no longer meet the all the demands in terms of volume and output conditions. Developments of the new material are being carried out under these circumstances..

Graphite is a carbon material with very high crystallizability and the storage sites of lithium is well defined. However, the storage sites of lithium are limited and theoretically, anode volume can not exceed 372mAh/g. Furthermore, lithium ions are expanded through the very narrow graphite layers so that the velocity of expansion is limited and the output is also limited. These days, there is a lot of demand for high capacity and high output for secondary battery for electrical cars or power storage, market for which is growing rapidly. Research on new electrode materials with high capacity and high output is competitively being undertaken worldwide.

The most notable anode materials with capacity that is higher than graphite are anode materials which are alloyed with Si, Sn and the like. Theoretical capacity(Maximum storage capacity of Lithium) of Si is 3580mAh/g which is 10 times that of graphite materials. Capacity of Sn is also high at 994mAh/g. However, these alloyed anode materials are significantly low in terms of lifespan due to a big volume change during charging and discharging. That is why the applications of these anode materials are limited now. Transition metals, MOₓ (M=Co, Fe, Ni, Cu, Mn and the like), are also noteworthy as anode materials with high capacity. Li₂O reacts reversibly to show its capacity, which is different from conventional electrode materials.

CoO + 2 Li⁺ ↔ Li₂O + Co

It is reported that the charging and discharging mechanism of this compound is related to the formation and decomposition of Li₂ and the oxidation and reduction reaction of 1∼5nm-size metal unlike Lithium intercalation/deintercalation reaction of carbon-based materials or Lithium-alloy formation process of alloy-based materials. Lithium reacts with metal oxide and 1∼5nm-size metal particle is generated in the Li₂0 matrix to form Li₂O/nano metal complex and this complex charges and discharges showing the reversible capacity. However, when discharging, the voltage is significantly high at about 2V in respect of Lithium reference electrode. Therefore, the voltage of unit battery becomes low. Also, there are life-shortening and low initial efficiency problems due to volume change caused by the charging and discharging. Because of these problems, it was not applied to the actual field of this technology.

Hard carbon or soft carbon which has better performance than graphite in terms of output is being developed and applied to some secondary battery for hybrid electric cars. In the case of amorphous carbon, Lithium can be stored between carbon layers and in crystal defects, voids and the like so that theoretically the storage capacity of Lithium is bigger than graphite. However, the storage of Lithium(charging) is done in a range of 0.0 ∼ 1.0 V(compared with Lithium reference electrode) and Lithium is deposited when it is charged up to near 0.0 V so that it causes internal short circuit, making the stability of the battery low. Therefore, actual charging is done in a comparatively high voltage range. The actual anode electrode capacity is less than graphite. However, Lithium ion can be expanded to crystal defects, voids and the like as well as between carbon layers so that it has a better output performance than graphite.

A requirement for secondary batteries for electric cars or power storage is the charging and discharging voltage feature including the above mentioned capacity and output characteristic. If the charging and discharging voltage of the battery change linearly, there is a merit of being easy to track the SOC(state of charge). Amorphous carbon meets these requirements but the capacity is limited as stated. Therefore, it is necessary to develop new anode materials which have charging and discharging voltage features with linear change, meeting all the characteristic of the capacity and output also.

Lithium secondary battery has became a common power source for mobile electric devices and in the future, the market is expected to grow as applications expand as a power source of electric cars and means of power storage. Considering the immense Lithium secondary market in the future, securing the Lithium sources has become a big concern. It is predicted that the price will fluctuate severely due to monopolies and oligopolies. While Lithium reserves can only be found in a limited number of regions like South America, sodium reserves are larger than Lithium and the places of sodium reserves are more diverse compared with Lithium. It is forecasted that sodium will not be expensive and there will not be much fluctuation in sodium prices either.

Sodium secondary battery is being developed using the same concept as that of Lithium secondary battery. Up to now, hard carbon is known as an anode material which can store sodium. The sodium storage capacity of the hard carbon is around 200mAh/g which is not a small figure but sodium charging is mainly done near 0.0V(compared with sodium reference electrode ) so that the sodium can be deposited. Therefore, it causes internal short circuit of the battery, etc, making the stability of the sodium secondary battery low. It is important to develop new sodium storing materials which enable sodium to be charged at a voltage higher than 0.0V(compared with sodium reference electrode)

Super high volume capacitor is establishing its own market due to its features of of high output and long life compared with secondary battery. However, the electricity storage capacity of super high volume capacitor is 1/10 times that of Lithium secondary battery - so that there is a limit to how much the market can grow. To improve the electricity storage capacity of super high volume capacitors, a hybrid capacitor is being developed, in which one electrode uses activated carbon which is used as a capacitor electrode and the other electrode uses electrode which is used as a Lithium secondary electrode. Using an electrode of the Lithium battery with a big capacity for one electrode, the capacity of capacitor can be increased.

However, the Lithium battery electrode used should have outstanding output features as well as large capacity in order to take advantage of the capacitor's merit of high output. Thus, a hybrid capacitor electrode with strong output features should be developed..

### Disclosure of Invention

### Technical Problem

The purpose of this invention is to provide an amorphous anode active material, preparation method of electrode using same, secondary battery containing same, and hybrid capacitor which is using amorphous metal oxide or amorphous metal phosphate as an anode active material so as to improve the storage capacity of lithium, sodium, etc. and the diffusion velocity of ions.

Furthermore, the purpose of this invention is to provide an amorphous anode active material, preparation method of electrode using same, secondary battery containing same, and hybrid capacitor which makes it very easy to track or predict the state of charge because it has a significant charging and discharging velocity feature and shows charging and discharging voltage curve with a slope of almost a straight line as well as high capacity.

### Solution to Problem

The present invention of an amorphous anode active material is **characterized in that** said anode active material comprises at least one of metal oxide or metal phosphate and the metal oxide and the metal phosphate are amorphous.

Furthermore, the metal oxide may be in the form of MOx(0 < X ≤ 3) and said M may be at least one of Mo, V, Sc, Ti, Cr, Y, Zr, Nb or W.

The metal phosphate may be in the form of AₓB_{y}(PO₄) (0 ≤ x ≤ 2, 0 < y ≤ 2) and the A is at least one of Li, Na or K and the B may be at least one of Mo, V, Sc, Ti, Cr, Y, Zr, Nb or W.

The metal oxide and the metal phosphate may further comprise at least one of the Co, Fe, Ni, Mn, Cu, Al, Mg, Ca, Li, Na, K or Si.

And, the mean diameter of said metal oxide and the metal phosphate may be from 0.01µm to 100 µm and the diameter of the primary particle of said metal oxide and the metal phosphate may be from 0.01µm to 1µm.

The ratio of signal to noise(S/N ratio) may be less 50 on the base of the noise when measured by X-ray diffraction from 10° to 60° at an interval of 0.01° and at a scanning rate of 1°/min to 16°/min.

Furthermore, this invention may provide secondary battery comprising anode electrode which comprises the amorphous anode active material.

The secondary battery may further comprise, Cathode containing at least one of Lithium metal oxide or Lithium metal phosphate; Separator between the cathode and the anode; and Electrolyte.

The Lithium metal oxide in the cathode may comprise at least one of LiCoO₂ LiNiO₂, LiMn₂O₄, Li(Ni_{1/3}Mn_{1/3}Co_{1/3})O₂, LiNiO_{0.5}Mn_{1.5}O₄ or LiNi_{0.5}Mn_{0.5}O₂ and the Lithium metal phosphate in the cathode comprises at least one of LiFePO₄, LiMnPO₄ or Li₃V₂((PO₄)₃).

The separator may comprise at least one of polypropylene or polyethylene.

The electrolyte may be an organic solvent where a Lithium salt is dissolved and the organic solvent comprises at least one of ethylene carbonate, propylene carbonate, diethyl carbonate, dimethyl carbonate, 1,2-dimethoxyethane, 1,2-diethoxyethane, γ-butyrolactone, tetrahydrifuran, 2-methyltetrahydrofuran, 1,3-dioxene, 4-methyl-1,3-dioxene, diethyl ether, sulfolane, ethyl methyl carbonate or butyronitrile and the Lithium salt comprises at least one of LiClO₄, LiCF₃SO₃, LiAsF₆, LiBF₄, LiN(CF₃SO₂)₂, LiPF₆, LiSCN, LiB(C₂O₄)₂ or LiN(SO₂C₂F₅)₂.

Furthermore, this invention may provide hybrid capacitor comprising anode electrode which comprises the amorphous anode active material.

The invention also may provide method for preparing an electrode using an amorphous anode active material, **characterized in that** the electrode is prepared in steps of; Preparing a paste by mixing the amorphous anode active material, a binder and a dispersion solution and the amorphous anode active material comprises at least one of metal oxide or metal phosphate; Coating the paste on a current collector for the electrode; and Drying the paste at a temperature of 50 to 200 .

When preparing the paste, a conductive material may be additionally mixed and the conductive material is at least one of carbon black, vapor grown carbon fiber or graphite in the form of powder and the conductive material is 1-30 parts by weight with respect of 100 parts by weight of the anode active material.

In preparing an electrode, the metal oxide may be in the form of MOx (0 < X ≤ 3) and the M is at least one of Mo, V, Sc, Ti, Cr, Y, Zr, Nb or W and the metal phosphate is in the form of AₓB_{y}(PO₄) (0 ≤ x ≤ 2, 0 < y ≤ 2) and the A is at least one of Li, Na or K and the B is at least one of Mo, V, Sc, Ti, Cr, Y, Zr, Nb or W.

In preparing an electrode, the dispersion solution may comprise at least one of N-Methyl Pyrrolidone(NMP), isopropyl alcohol, acetone or water and the binder comprises at least one of PolyTetraFluoroEthylene(PTFE), PolyVinyliDene Fluoride(PVDF), cellulose, Styrene Butadiene Rubber(SBR), polyimide, polyacrylic acid, PolyMethylMethAcrylate(PMMA) or PolyAcryloNitrile(PAN).

In preparing an electrode, with respect of 100 parts by weight of the anode active material, the dispersion solution may be 10 to 200 parts by weight and the binder is 3 to 50 parts by weight.

In preparing an electrode, the current collector may be at least one of cupper, aluminum, stainless or nickel.

### Advantageous Effects of Invention

This invention has advantageous effects of improving the storage capacity of lithium, sodium, etc. and the diffusion velocity of ions to have high-capacity of battery and a significant charging and discharging velocity feature by using an amorphous anode active material, preparation method of electrode using amorphous metal oxide or amorphous metal phosphate as an anode active material.

Furthermore, as well as high capacity and good charging and discharging capability, this invention have very good effect in charging the battery, tracking and predicting the state of charge or state of discharge with almost a straight line-like slope of charging and discharging voltage curve.

### Brief Description of the Drawings

Drawing 1 is a flow chart which shows method for manufacturing an electrode using amorphous anode active material of the present invention.

Drawing 2 is a graph which shows the result of the X ray diffraction test of the preferred example 1 and comparative example 1 in experiment 1.

Drawing 3a is a picture taken of the preferred example 1 with an electron microscope in experiment 1.

Drawing 3b is a picture taken of the comparative example 1 with an electron microscope in experiment 1.

Drawing 4 is a graph which shows the result of the X ray diffraction test of the preferred example 2 and comparative example 2 in experiment 1.

Drawing 5a is a picture taken of the preferred example 2 with a scanning electron microscope in experiment 1.

Drawing 5b is a picture taken of the preferred example 2 with a transmission electron microscope in experiment 1.

Drawing 6 is a graph which shows the result of the X ray diffraction test of the preferred example 3 and comparative example 3 in experiment 1.

Drawing 7 is a picture taken of the preferred example 3 with an electron microscope in experiment 1.

Drawing 8 is a graph which shows the electrochemical characteristic of preferred example 1 and comparative example 1 in experiment 2.

Drawing 9 is a graph which shows the electrochemical characteristic of preferred example 2 and comparative example 2 in experiment 2.

Drawing 10 is a graph which shows the electrochemical characteristic of preferred example 3 and comparative example 3 in experiment 2.

Drawing 11 is a graph which shows the feature of discharging velocity of the preferred example 1, 2 and 3 in experiment 3.

Drawing 12 is a graph which shows the charging feature of the material of the preferred example 1, 2 and 3 in experiment 4.

Drawing 13 is a graph which shows the cycle characteristic of the material of the preferred example 1, 2 and 3 in experiment 5.

Drawing 14 is a graph which shows the electrochemical characteristic of the sodium secondary battery using preferred example 2 as an anode material in experiment 6.

Drawing 15 is a graph which shows the cycle characteristic of the sodium secondary battery using preferred example 2 as an anode material in experiment 6.

Drawing 16 is a graph which shows the electrochemical characteristic of the sodium secondary battery using preferred example 3 as an anode material in experiment 6.

Drawing 17 is a graph which shows the cycle characteristic of the sodium secondary battery using preferred example 3 as an anode material in experiment 6.

### Best Mode for Carrying out the Invention

This invention, anamorphous anode active material, preparation method of electrode using the same, secondary battery containing the same, and hybrid capacitor, is explained with the reference of the following drawings.

The anode active material of this invention comprises at least one of metal oxide or metal phosphate. This invention is characterized by the feature of the metal oxide and metal phosphate being amorphous.

The meaning of 'amorphous' is that there is no specific peak when measured from 10° to 60° at an interval of 0.01°, at a scanning rate of 1°/min to 16°/min by X-ray diffraction analysis. The lower the crystallinity of the amorphous anode active material, the greater the diffusion velocity of Lithium ion and Lithium storage space with more defects, voids, etc. The degree of crystallinity can be measured by the experiment of the X-ray diffraction analysis. It was revealed that after a number of experiments, if there is no peak under the same experimental condition, this invention is effective.. It can be determined if the above peak exists by checking if there is a significantly bigger signal compared with the noise which is made on the base line. If the signal is big enough, measuring a ratio of signal to noise(S/N ratio) larger than 50, it can be determined that there is a feature peak. The size of noise means the amplitude of the base line in the region where there is no particular peak and it is possible to determine the noise using the standard deviation.

The ratio of signal to noise refers to the size of the signal compared to the size of the noise based on the amplitude of noise which is generated on the base line. It is desired that the ratio of the signal to noise should be less than 10. The above condition is required for this invention to be effective.

The metal oxide is in the form of MOx (0 < **X** ≤ 3) and the M comprises at least Mo, V, Sc, Ti, Cr, Y, Zr, Nb or W. M can be used in the form of a metal compound to lower the crystallinity and generate more defects, void, etc.

The metal oxide and metal phosphate can comprise at least one of Co, Fe, Ni, Mn, Cu, Al, Mg, Ca, Li, Na, K or Si. They lower the crystallinity to generate more defects, void, etc.

Amorphous metal oxide and metal phosphate with the above compositions have high capacity and good charging and output performance. Also the voltage of the unit battery can be raised because the discharging voltage(the voltage where the deintercalation of Lithium occurs) has almost a straight line-like slope from 0V up to 3V compared with other transition metal oxides. The other transition oxides have conversion reaction around average charging voltage.

The charging voltage(the voltage where the intercalation of Lithium occurs) has a slope close to a straight line up to 3V and most of the charging occurs in a range of voltage larger than 0.0V compared with the Lithium reference electrode so that there is little risk of Lithium deposition.

Because the charging and discharging voltage curve is almost a straight line, it is easier to track and predict the state of charge or state of discharge.

Because the anode active materials with the amorphous metal oxide and metal phosphate have various advantages as stated which a conventional anode active materials do not have, there is a high possibility that it can be applied to anode materials for electric cars or power storage. Clear evidence of such high performance can be seen through the below experiments which will be explained.

The mean diameter of the metal oxide and the metal phosphate is preferably from 0.01 µm to 100 µm and more preferably is from 0.1 µm to 10 µm. If the mean diameter is less than 0.01 µm or more than 100 µm, the reactivity of Lithium decreases and it is not easy to have a polar plate molded.

The diameter of the primary particle of the metal oxide and the metal phosphate is preferably from 0.01 µm to 1 µm and more preferably is from 0.1 µm to 0.5 µm. If the diameter of the primary particle is less than 0.01 µm or more than 1 µm, the reactivity of Lithium decreases and it is not easy to make a polar plate molded.

The primary particle is a particle which constitutes powder and agglomerate. It is the smallest particle that exists without breaking an intermolecular bonding and does not agglomerate with other particles existing independently. The secondary particle, or agglomerate particle, is a particle which is formed by agglomerating several primary particles.

In conclusion, when determining the particles, the particle unit without cracks or splits is a primary particle and the secondary particle consists of the first particles which gather, making agglomerate.

The amorphous anode active material of this invention is used in the anode material for the secondary battery or hybrid capacitor and there are various applications for the anode material.

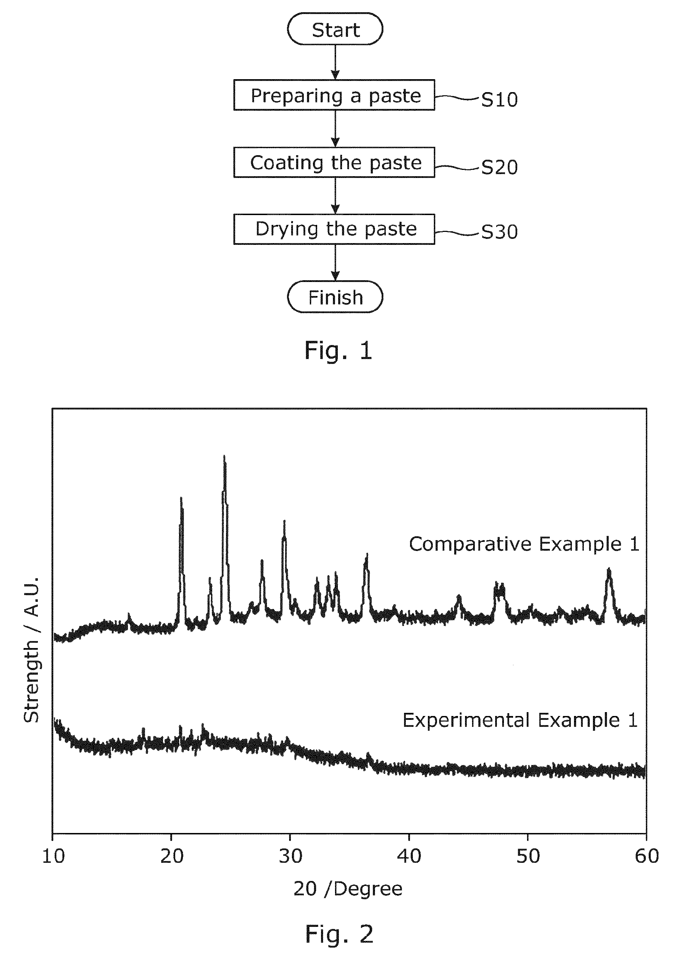

Next, the method for preparing an electrode using an amorphous anode active material, as illustrated in drawing 1, comprises steps of preparing a paste(S10), coating the paste(S20) and drying the paste(S30).

Preparing a paste(S10) is a step of preparing a paste by mixing the amorphous anode active material, a binder and a dispersion solution and the amorphous anode active material comprises at least one of metal oxide or metal phosphate. The anode active material was explained already and anode active material and binder is used in the form of powder for making a paste easily. Stirring process is preferred in mixing but there are no restrictions in mixing method as long as a homogeneous mixture is obtained.

In preparing a paste(S10), a conductive material can be mixed additionally and the conductive material is mixed together with the anode active material, binder and dispersion solution. It makes the resistance of electrode decrease and the battery output increase.

The conductive material is at least one of carbon black, vapor grown carbon fiber or graphite in the form of powder and the conductive material is preferably 1-50 parts by weight with respect of 100 parts by weight of the anode active material and more preferably 10-30 parts by weight. If the conductive material is less than 1 parts by weight, the resistance of electrode does not decrease enough. If the conductive material is more than 50 parts by weight, it is no more economically feasible and can damage the function of the anode active material.

The binder comprises at least one of PolyTetraFluoroEthylene(PTFE), PolyVinyliDene Fluoride(PVDF), cellulose, Styrene Butadiene Rubber(SBR), polyimide, polyacrylic acid, PolyMethylMethAcrylate(PMMA) or PolyAcryloNitrile(PAN). The binder is preferably 3-50 parts by weight with respect of 100 parts by weight of the anode active material and more preferably 20-40 parts by weight. If the binder is less than 3 parts by weight, it cannot act well as a binder. If the binder is more than 50 parts by weight, it can lower the reactivity of the anode active material.

The dispersion solution comprises at least one of N-Methyl Pyrrolidone(NMP), isopropyl alcohol, acetone or water. It helps the anode active material, the binder and the conductive material mixed and dispersed well. With respect of 100 parts by weight of the anode active material, the dispersion solution is preferably 10 to 200 parts by weight and more preferably 50 to 100 parts by weight. If the dispersion solution is less than 10 parts by weight, the dispersion cannot occur well and it is difficult to disperse the materials. If the dispersion solution is more than 200 parts by weight, it can make the dispersed solution thin and take longer to dry it, causing the process uneconomical.

Coating the paste(S20) is a step of coating the paste on a current collector for the electrode. When coating the paste, the current collector is at least one of cupper, aluminum, stainless or nickel. The current collector is a metal with high conductivity and the paste should be coated easily on the current collector. It does not limit any metal only if these functions can be obtained. In this invention, metals like cupper, aluminum, stainless or nickel perform the required functions well in this invention.

It can be various how to coat the paste obtained by the step of preparing a paste(S 10) on the current collector homogeneously. It is most preferred to coat the paste uniformly on the current collector using the doctor blade after distributing the paste on the current collector for electrode and sometimes, the dispersion and distribution step can be done together at the same time. In addition, coating like die casting, comma coating, screen printing and the like can be used and the current collector can be bound by pressing or lamination after molding on the other substrate.

Drying the paste(S30) is a step of drying the paste at a temperature of 50 to 200 . The temperature of drying is preferably 50 to 200 and more preferably 100 to 150 . If the temperature of drying is less than 50 , it takes longer to dry so that it is uneconomical. If the temperature of drying is more than 200 , the paste can be carbonized and the resistance of the electrode can increase due to the abrupt drying. Drying the paste(S30) is the process of drying the dispersion solution or solvent to be evaporated, passing through the hot-air drying zone.

The electrode by the method for preparing an electrode using an amorphous anode active material can be used in the anode material for the secondary battery or hybrid capacitor and there are also various applications of the anode material of this invention.

In this invention, secondary battery comprises anode, cathode, separator between the cathode and the anode and electrolyte.

The anode comprises the amorphous anode active material and the anode active material is already explained above.

The cathode in this invention comprises at least one of LiCoO₂ LiNiO₂, LiMn₂O₄, Li(Ni_{1/3}Mn_{1/3}Co_{1/3})O₂, LiNiO_{0.5}Mn_{1.5}O₄ or LiNi₀.₅Mn_{0.5}O₂ and the Lithium metal phosphate in the cathode comprises at least one of LiFePO₄, LiMnPO₄ or Li₃V₂((PO₄)₃). The most proper combination of the anode active materials can increase the reactivity of this invention. It makes the absorption and emission of Lithium ions much faster.

The separator is positioned between the anode and cathode. It prevents two electrodes from being the internal short circuit by separating and it wets the electrolyte. The separator comprises at least one of polypropylene or polyethylene to maximize the performance of the battery with the anode and the cathode.

The electrolyte is an organic solvent where a Lithium salt is dissolved and the organic solvent comprises at least one of ethylene carbonate, propylene carbonate, diethyl carbonate, dimethyl carbonate, 1,2-dimethoxyethane, 1,2-diethoxyethane, γ-butyrolactone, tetrahydrifuran, 2-methyltetrahydrofuran, 1,3-dioxene, 4-methyl-1,3-dioxene, diethyl ether, sulfolane, ethyl methyl carbonate or butyronitrile and the Lithium salt comprises at least one of LiC10₄, LiCF₃SO₃, LiAsF₆, LiBF₄, LiN(CF₃SO₂)₂, LiPF₆, LiSCN, LiB(C₂O₄)₂ or LiN(SO₂C₂F₅)₂. It can maintain the function of the battery keeping the performance of the electrodes and electrolyte.

### Mode for the Invention

Hereinafter, with exemplary embodiments of this invention of an amorphous anode active material, preparation method of electrode using same, secondary battery containing same, the effect of this invention is proven.

Preparation method of the electrode for the hybrid capacitor and preparation method of capacitor is like the secondary battery and if the secondary battery with good anode feature, it can be used also as an anode for hybrid capacitor. Therefore, for hybrid capacitor, preparation method of electrode, element of electrode and the characteristic of anode are omitted.

### Experimental Example 1 (Amorphous Li₃V₂(PO₄)₃)

After LiOHH₂O and NH₃VO₃ is dissolved in distilled water and is mixed with stirring to be dissolved completely, maintaining the temperature of 70°C, the solution is put in NH₄H₂PO₄ and sucrose-dissolved solution and it is stirred enough and it is dried at 80°C. Dried material is pressed and pallet is made. For 6 hours, pre-heating is treated under 300°C argon atmosphere. Then, after grinding and mixing, the pallet is made again and heat treatment under 600°C argon atmosphere is done again. At a temperature less than 600°C, vanadium is not reduced enough so that there can be impurity and as the temperature rises, the crystallizability increases. By element analysis, it is revealed that the parts by weight is Li : V : P : O = 5.0 : 24.8 : 22.1 : 48.1.

### Experimental Example 2 (Amorphous MoO₂)

At pH 11∼12, 50ml KBH₄ of 2.5 mole concentration is prepared. At dilute HC1 aqueous solution, K₂MoO₄ solution of 0.25 mole concentration is prepared at pH=1. Stirring KBH₄ solution prepared already, the K₂MoO₄ solution is put slowly through burette and a solid is formed by reduction. It is filtrated and the powder is collected. Obtained powder is treated thermally at 300°C in vacuum to synthesize an amorphous MoO₂ If the temperature of thermal treatment is over 500°C, the crystalline structure is made. Therefore, thermal treatment is done below 500°C. By element analysis, it is revealed that the parts by weight is Mo : O = 74.4 : 25.6.

### Experimental Example 3 (Amorphous V₂O₅)

Crystalline V₂O₅ is dissolved in oxalic acid with distilled water and boiled by heating. HC1 and distilled water is added, keeping heated for 20 minutes. The color of this solution is blue. The solution is put into ammonia solution and at a room temperature and it is stirred to obtain the deposition. After filtrating and cleaning with ethanol, the impurity is removed. With this powder obtained, the amorphous V₂O₅ is made by thermal treatment at 100°C for 1 hour. By element analysis, it is revealed that the parts by weight is V : O = 55.0 : 45.0.

### Comparative Example 1 (Crystalline Li₃V₂(PO₄)₃)

After LiOH•H₂O and NH₃VO₃ is dissolved in distilled water and is mixed with stirring to be dissolved completely, maintaining the temperature of 70°C, the solution is put in NH₄H₂PO₄ and sucrose-dissolved solution and it is stirred enough and it is dried at 80°C. Dried material is pressed and pallet is made. For 6 hours, pre-heating is treated under 300°C argon atmosphere. Then, after grinding and mixing, the pallet is made again and heat treatment under 600°C argon atmosphere is done again. By element analysis, it is revealed that the parts by weight is Li : V : P : O = 5.2 : 25.1 : 22.4 : 47.3.

### Comparative Example 2 (Crystalline MoO₂)

After purchasing a crystalline MoO₂ by Aldrich and it is used.

### Comparative Example 3 (Crystalline V₂O₅)

After purchasing a crystalline V₂O₅ by Aldrich and it is used.

### <Experiment 1> X-ray diffraction analysis experiment and observation of particle shape.

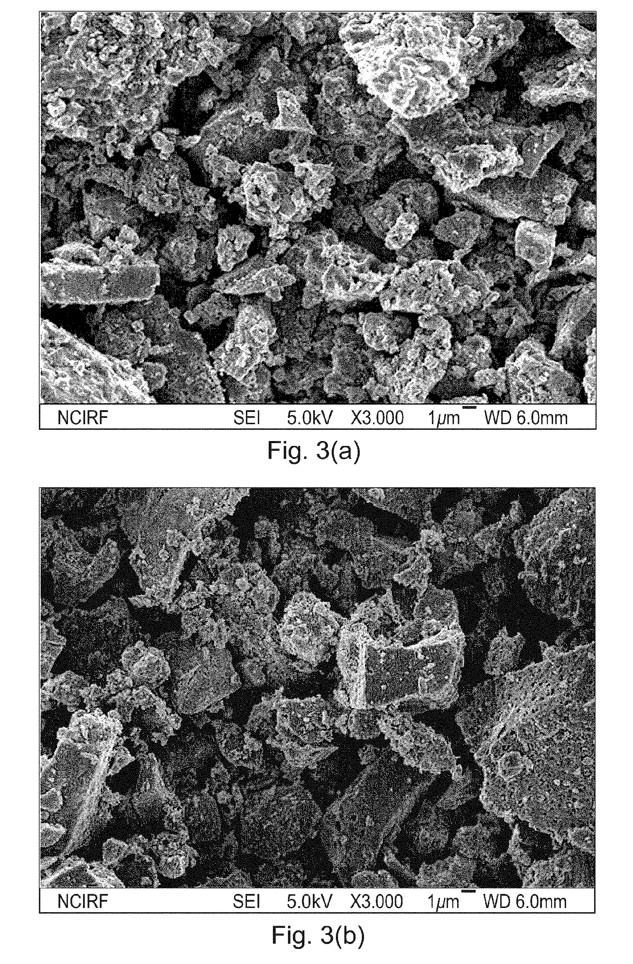

To determine the crystallizability of Experimental example 1 of amorphous Li₃V₂(PO₄)₃ prepared according this invention and Comparative Example 1 of crystalline Li₃V₂(PO₄)₃, the X-ray diffraction analysis is experimented. As illustrated in Drawing 2, in case of amorphous Li₃V₂(PO₄)₃ which was synthesized at 600°C, there was no feature peak after X-ray diffraction analysis experiment. However, in case of crystalline Li₃V₂(PO₄)₃ which was made at 800°C, there was a feature peak after X-ray diffraction analysis experiment revealing that the crystal grows. As illustrated in Drawing 3a and 3b, in pictures of Experimental Example 1 and Comparative Example 1 taken by electron microscope, the particle of Experimental Example 1 is a particle with round shape and below 1 µm size. However, the particle of Comparative Example 1 is a particle which has grown more with much bigger size. In result, it shows that Experimental Example 1 is amorphous and Comparative Example 1 is crystalline.

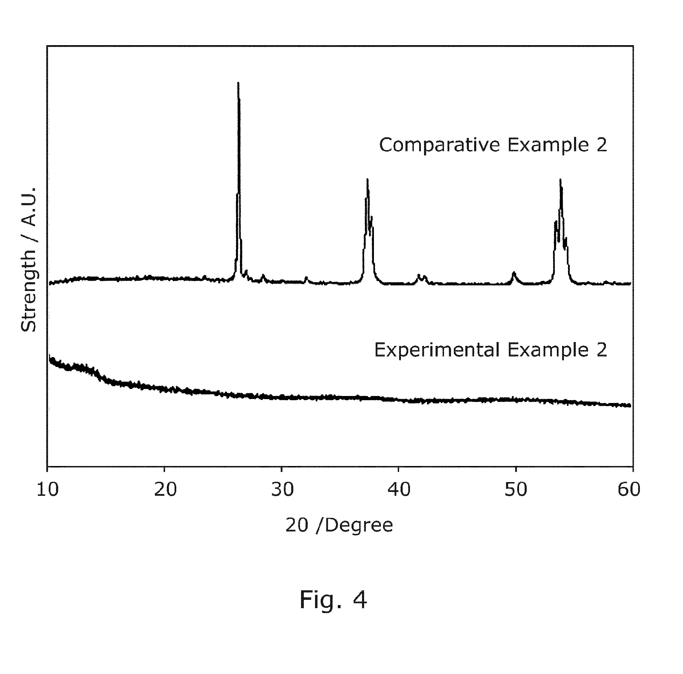

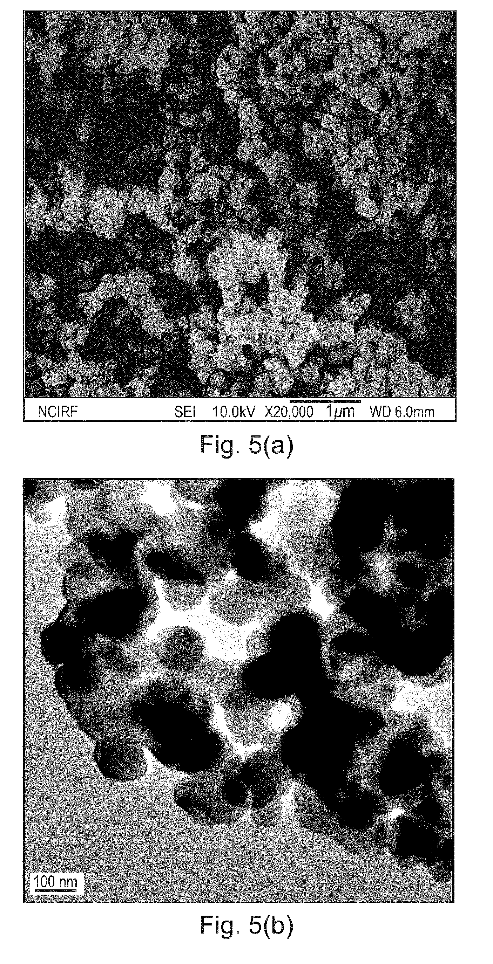

To determine the crystallizability of Experimental example 2 of amorphous MoO₂ prepared according this invention and Comparative Example 2 of crystalline MoO₂, the X-ray diffraction analysis is experimented. As illustrated in Drawing 4, in case of amorphous MoO₂ which was prepared according to this invention, there was no feature peak after X-ray diffraction analysis experiment. However, in case of crystalline MoO₂ which was prepared, there was a feature peak after X-ray diffraction analysis experiment revealing that the crystal grows. As illustrated in Drawing 5a and 5b, in pictures of Experimental Example 2 and Comparative Example 2 taken by electron microscope, the particle of Experimental Example 2 is a particle with round shape and below 0.1 µm size while the particle of Comparative Example 2 is much bigger and growing. In result, it shows that Experimental Example 2 is amorphous and Comparative Example 2 is crystalline.

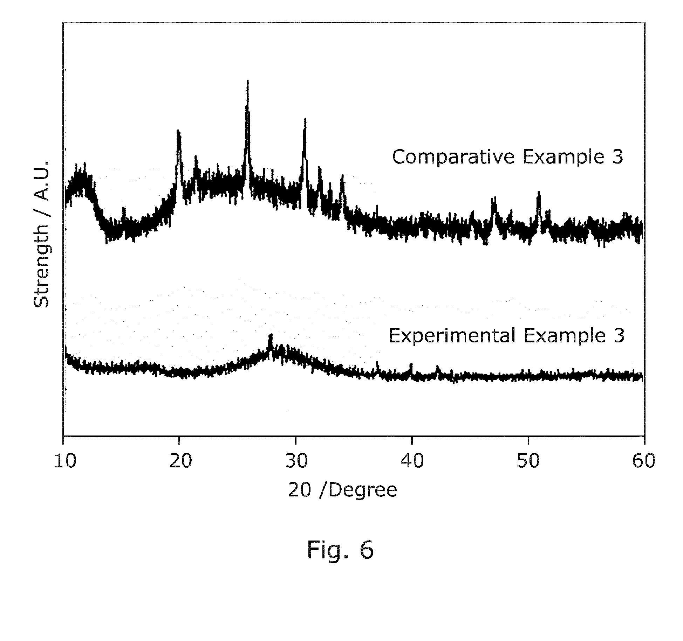

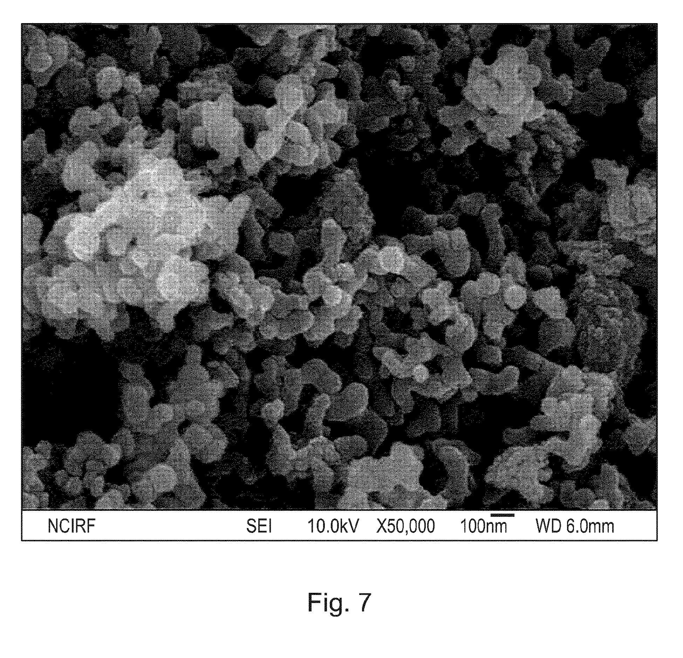

To determine the crystallizability of Experimental example 3 of amorphous V₂O₅ prepared according this invention and Comparative Example 3 of crystalline V₂O₅, the X-ray diffraction analysis is experimented. As illustrated in Drawing 6, in case of amorphous V₂O₅ which was prepared according to this invention, there was no feature peak after X-ray diffraction analysis experiment. However, in case of crystalline V₂O₅, there was a feature peak after X-ray diffraction analysis experiment revealing that the crystal grows. As illustrated in Drawing 7, in pictures of Experimental Example 3 and Comparative Example 3 taken by electron microscope, the particle of Experimental Example 3 is a particle with round shape and below 0.1 µm size while the particle of Comparative Example 3 is much bigger and growing. In result, it shows that Experimental Example 3 is amorphous and Comparative Example 3 is crystalline.

### [Preparation of Electrode]

To conduct an experiment of charging and discharging of the Lithium ion secondary battery, the electrode is manufactured using the sample which is prepared already according to this invention. To check the capacity of charging and discharging of the Lithium ion secondary battery using the anode active material according to this invention and evaluate the electrochemical characteristics, the electrode is prepared using the samples of the Experimental example 1, 2 and 3 and Comparative Example 1, 2 and 3. To provide conductivity to the electrode, carbon black as a conductive material and PolyVinyliDene Fluoride(PVDF) as a binder are used. The binder is used as dissolving it in the solvent, N-Methyl Pyrrolidone(NMP). The anode active material, the conductive material and the binder is mixed and stirred enough in the proportion 70 : 20 : 10 parts by weight. Then, after coating on the cupper current collector and drying at 120 , N-Methyl Pyrrolidone(NMP) is removed. Dried electrode is pressed using roll press and cut in a proper size. After drying at 120 for 12 hours, the moisture is eliminated. Using the prepared electrode, 2032 size of coin cell is made inside the glove box under the argon atmosphere. As an opposite electrode, Lithium metal foil is used and as an electrolyte, 1 mole concentration of LiPF₆/ethylene carbonate(EC) : dimethyl carbonate(DMC) (volume ratio 1:1) is used to prepare the electrochemical cell.

### <Experiment 2> Capacity of material and Reactive Voltage

Experiment of coin cell which prepared using the samples of the Experimental example 1, 2 and 3 and Comparative Example 1, 2 and 3 is conducted at a constant current. When charging and discharging, the current of 100mA/g is used in a voltage range of 0.01∼3.0V (*vs.* Li/Li⁺).

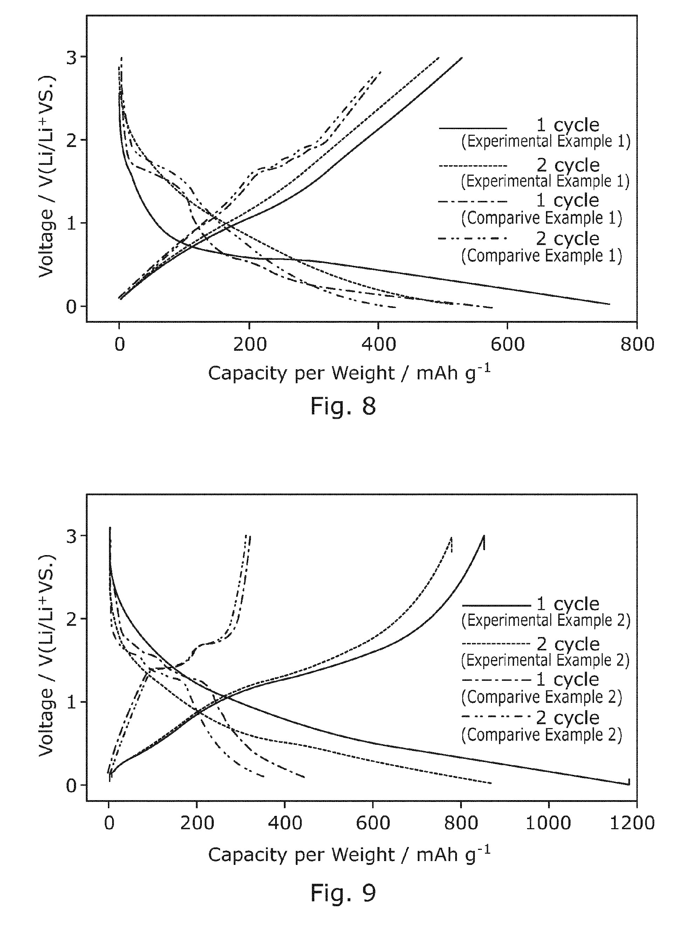

After the electrochemical characteristic of amorphous Li₃V₂(PO₄)₃ of Experimental Example 1 and crystalline Li₃V₂(PO₄)₃ of Comparative Example 1 is compared, as illustrated in Drawing 8, it is revealed that the capacity of Experimental Example 1 is larger than 500mAh/g with a gentle slope of discharging curve while the capacity of Comparative Example 1 is larger than that of the conventional graphite but does not exceed 400mAh/g with a voltage plateau resulting from the crystal structure. Therefore, it turned out that the amorphous phase like Experimental Example 1 has higher capacity than the crystalline phase like Comparative Example 1.

After the electrochemical characteristic of amorphous MoO₂ of Experimental Example 2 and crystalline MoO₂ of Comparative Example 2 is compared, as illustrated in Drawing 9, it is revealed that the capacity of Experimental Example 2 is larger than 800mAh/g with a gentle slope of discharging curve while the capacity of Comparative Example 2 does not exceed 400mAh/g with a voltage plateau resulting from the crystal structure. Therefore, it turned out that the amorphous phase like Experimental Example 2 has higher capacity than the crystalline phase like Comparative Example 2.

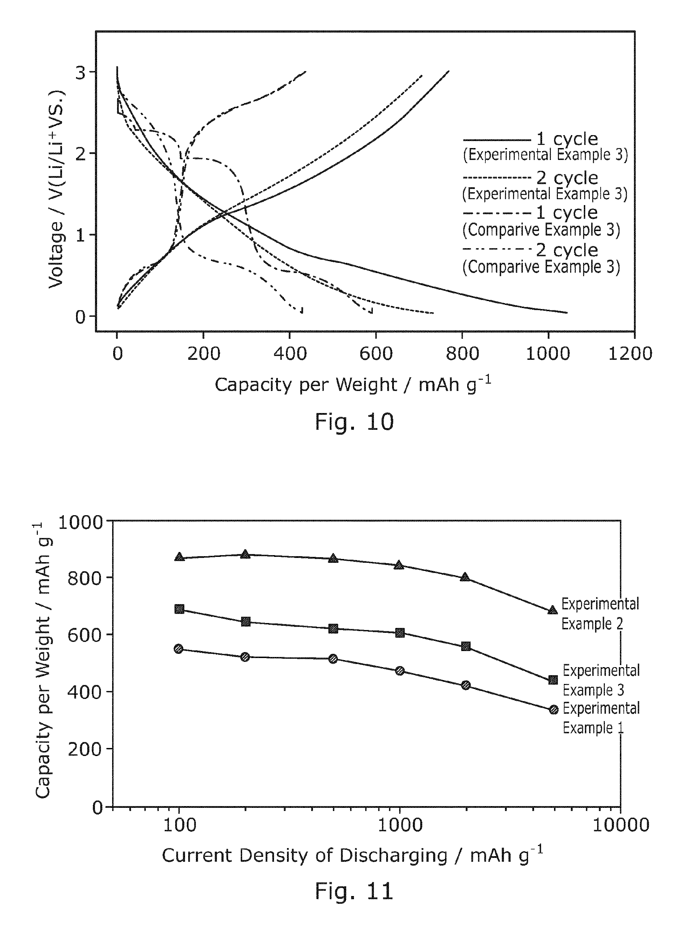

After the electrochemical characteristic of amorphous V₂O₅ of Experimental Example 3 and crystalline V₂O₅ of Comparative Example 3 is compared, as illustrated in Drawing 10, it is revealed that the capacity of Experimental Example 3 is larger than 700mAh/g with a gentle slope of discharging curve while the capacity of Comparative Example 3 does not exceed 500mAh/g with a voltage plateau resulting from the crystal structure. Because most of the capacity is observed above 2V, the energy seems to be very low. Therefore, it turned out that the amorphous phase like Experimental Example 3 has higher capacity than the crystalline phase like Comparative Example 3 showing that Experimental Example 3 also lowers the reaction voltage.

In case of Experimental Example 1, 2 and 3 which is using an amorphous phase, all of charging and discharging curves have a gentle slope. It is easy to know the state-of-charge estimation of the battery by voltage.

### < Experiment 3> discharging rate capability feature of the material

Using the coin cell prepared according to the same method as stated above, the rate capability of the battery is measured. In the discharging rate capability experiment, it is charged constantly at 100mA/g in the same voltage range. When discharging, the discharging capability is measured by elevating the current density like 100, 200, 500, 1000, 2000, 5000mA/g and the like.

As illustrated in Drawing 11, in case of the discharging rate of Experimental Example 1, when the discharging current is elevated up to 5000mA/g, it can discharge with a capacity of over 400mAh/g. It shows 75% of the maximum capacity of the material. Because the current of 5000mA/g is relatively a high current(the current size which can finish discharging for 1/13 hours) which is 13C by graphite standard, it shows that it has a very remarkable discharging rate feature. In case of the discharging rate of Experimental Example 2, when the discharging current is elevated up to 5000mA/g, it can discharge with a capacity of over 683mAh/g. It shows 78% of the maximum capacity of the material. In case of the discharging rate of Experimental Example 3, when the discharging current is elevated up to 5000mA/g, it can discharge with a capacity of over 470mAh/g. It shows 70% of the maximum capacity of the material. Therefore, in case of the battery using the electrode material according to Experimental Examples, when the discharging current is elevated up to 5000mA/g, it can discharge with above 70% of the maximum capacity of the material, which means that it has a very remarkable discharging rate feature. It is understood that the material can start to react with Lithium very easily because of the structure of the amorphous material.

### < Experiment 4> charging feature of the material

Using the coin cell prepared according to the same method as stated above, the charging rate capability of the battery is measured. In the charging rate capability experiment, with increasing current of charging and discharging by 100, 200, 500, 1000mA/g in the same voltage range, it is observed to see discharging capacity at a constant current.

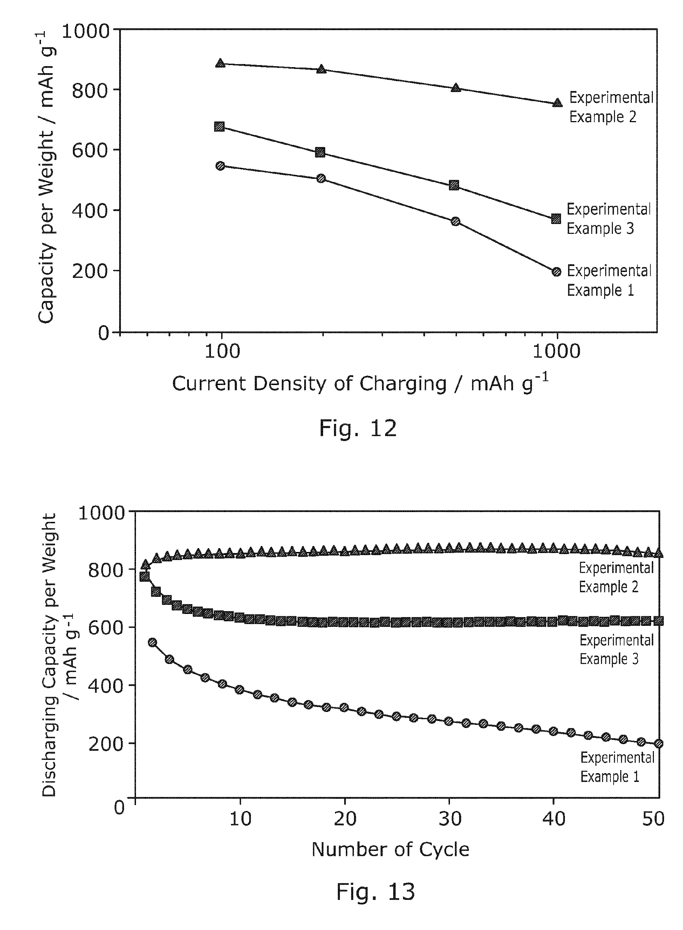

As illustrated in Drawing 12, in case of the charging rate of Experimental Example 1, when the discharging current is elevated up to 1000mA/g, it can discharge with a capacity of 318mAh/g. It shows 60% of the maximum capacity of the material. Because the current of 1000mA/g is relatively a high current which is 3C by graphite standard, it shows that it has a very remarkable discharging rate feature. In case of the charging rate of Experimental Example 2, when the discharging current is elevated up to 1000mA/g, it can discharge with a capacity of over 750mAh/g. It shows 85% of the maximum capacity of the material. Because the current of 1000mA/g is relatively a high current which is 3C by graphite standard, it shows that it has a very remarkable discharging rate feature. In case of the charging rate of Experimental Example 3, when the discharging current is elevated up to 1000mA/g, it can discharge with a capacity of over 413mAh/g. It shows over 60% of the maximum capacity of the material. Therefore, in case of the battery using the electrode material according to Experimental Examples, when the discharging current is elevated up to 5000mA/g, it can discharge with above 70% of the maximum capacity of the material. Compared with Experimental Example 2, it is relatively a little low but has a remarkable discharging rate feature. It is understood that the material can start to react with Lithium very easily because of the structure of the amorphous material.

### < Experiment 5> cycle feature of the material

Using the electrode prepared according to the preparation method of electrode as stated above, coin cell of 2032 size is the cycle feature of the battery is measured. In the experiment of the cycle feature of the material, when charging and discharging, the current of 100mA/g is used in the same voltage range.

As illustrated in Drawing 13, in the cycle feature of Experimental Example 1, it maintains 60% of the initial capacity at 30 cycles. The cycle feature is not that superior to that of the conventional graphite material. However, considering the conversion reaction where there is a big volume change, it shows that the cycle feature is relatively good. In the cycle feature of Experimental Example 2, it shows some increase of capacity at first and there is no decrease of capacity up to 50 cycles. Experimental Example 2 has a remarkable cycle feature. In the cycle feature of Experimental Example 3, it shows small decrease of capacity up to 5 cycles and after that, there is no decrease of capacity at all. The amorphous metal oxides and metal phosphates of this invention have high capacity, output feature, charging and discharging voltage which is changing like straight line and further more good cycle life. Therefore, it is thought that it can be commercialized as an anode active material of Lithium secondary battery.

### < Experiment 6> sodium secondary battery feature

Using the electrode prepared according to the preparation method of electrode as stated above, coin cell of 2032 size is made inside the glove box under the argon atmosphere to measure the features of sodium secondary battery. As an opposite electrode, sodium metal is used and as an electrolyte, 1 mole concentration of NaC1O₄/ethylene carbonate(EC) : propylene carbonate(PC) is used.

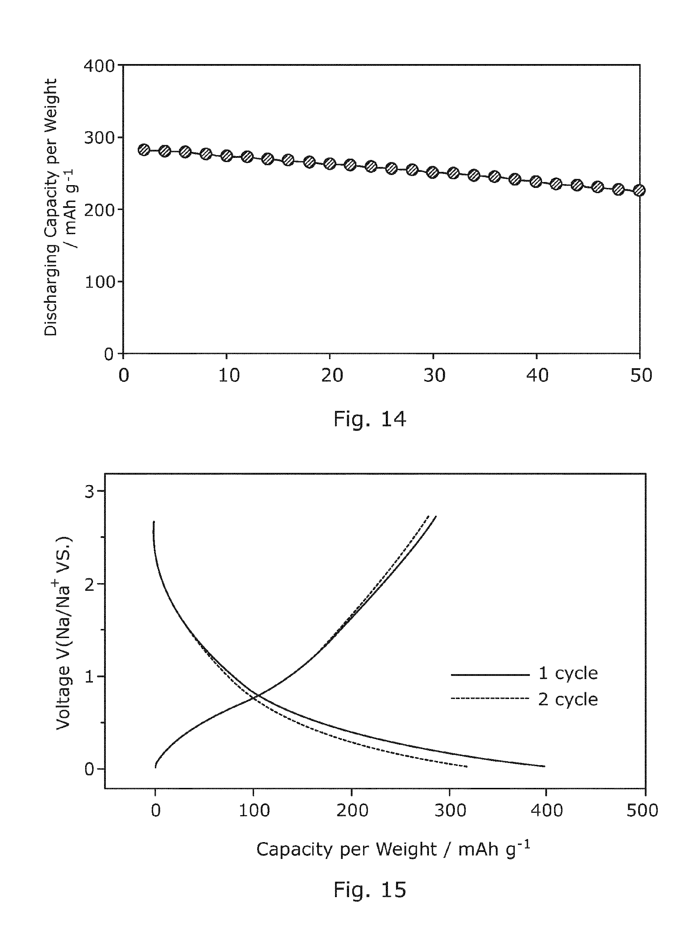

As illustrated in Drawing 14, the amorphous MoO₂ prepared according to Experimental Example 2 shows straight-line like charging and discharging voltage feature when the current of charging and discharging is 50mA/g and charging and discharging in a voltage range of 0.01V ∼2.7V(compared with sodium reference electrode).

As illustrated in Drawing 15, it shows 290mAh/g of discharging capacity first and 220mAh/g of discharging capacity after 50 cycles. Because the intercalation and deintercalation of the sodium is reversible, there is much possibility that it can be used as an anode of sodium secondary battery.

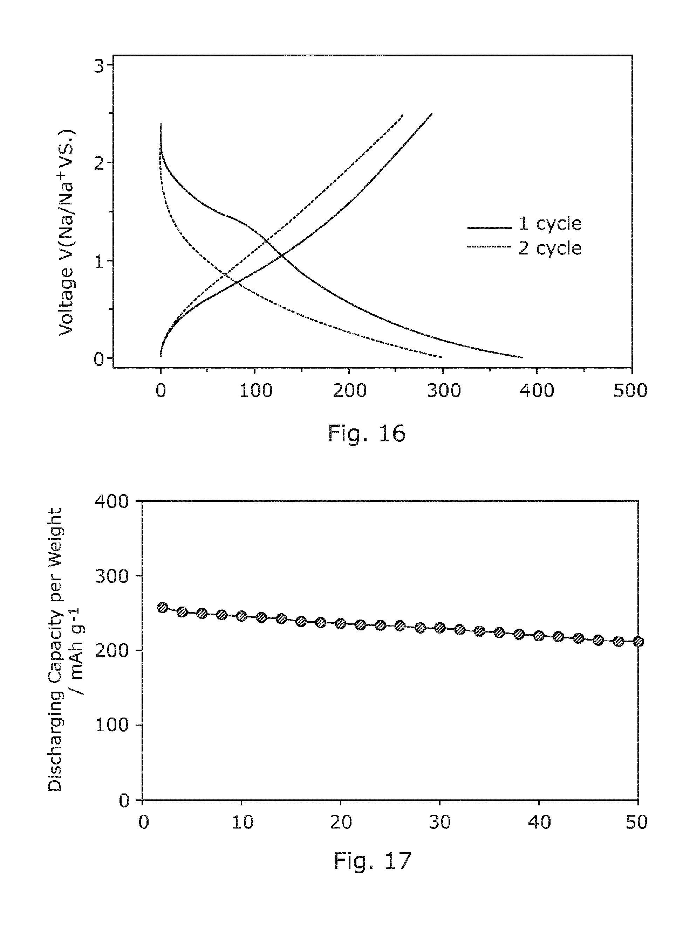

As illustrated in Drawing 16, the amorphous V₂O₅ prepared according to Experimental Example 3 shows straight-line like charging and discharging voltage feature when the current of charging and discharging is 25mA/g and charging and discharging in a voltage range of 0.01V ∼2.5V(compared with sodium reference electrode). As illustrated in Drawing 17, it shows 260mAh/g of discharging capacity first and 200mAh/g of discharging capacity after 50 cycles. Because the intercalation and deintercalation of the sodium is reversible, there is much possibility that it can be used as an anode of sodium secondary battery. In the amorphous material, there are many crystal defects, voids and the like. Therefore, even the sodium ion which is larger than the Lithium ion can easily expand to inside the material. Furthermore, there are enough storage space for sodium.

As explained above, the amorphous anode active material and electrode using thereof of this invention can be used for secondary battery or hybrid capacitor and there are other various applicable electrodes. These applications are all included in claims of this invention if the applications include the amorphous anode active material or the electrode of this invention.

While the invention has been illustrated and described with reference to certain exemplary embodiments thereof, it will be understood by those skilled in the art that various changes in form and details may be made therein without departing from the spirit and scope of the invention as defined by the appended claims and their equivalents.

### Industrial Applicability

This invention uses amorphous metal oxide and metal phosphate as an anode active material. Therefore, it increases the storage capacity of Lithium, sodium, etc. and the diffusion rate of ions, improving the battery capacity and velocity feature significantly. With these improvements, this invention can be applied industrially.

## Claims

1. Amorphous anode active material, **characterized in that** said anode active material comprises at least one of metal oxide or metal phosphate and the metal oxide and the metal phosphate are amorphous.

2. Amorphous anode active material according to Claim 1, **characterized in that** said metal oxide is in the form of MOx (0 < X ≤ 3) and said M is at least one of Mo, V, Sc, Ti, Cr, Y, Zr, Nb or W.

3. Amorphous anode active material according to Claim 1, **characterized in that** said metal phosphate is in the form of AₓB_{y}(PO₄) (0 ≤ x ≤ 2, 0 < y ≤ 2) and the A is at least one of Li, Na or K and the B is at least one of Mo, V, Sc, Ti, Cr, Y, Zr, Nb or W.

4. Amorphous anode active material according to any one of Claims 1-3, **characterized in that** said metal oxide and the metal phosphate further comprise at least one of the Co, Fe, Ni, Mn, Cu, Al, Mg, Ca, Li, Na, K or Si.

5. Amorphous anode active material according to any one of Claims 1-3, **characterized in that** the mean diameter of said metal oxide and the metal phosphate is from 0.01µm to 100 µm and the diameter of the primary particle of said metal oxide and the metal phosphate is from 0.01µm to 1 µm.

6. Amorphous anode active material according to any one of Claims 1-3, **characterized in that** the ratio of signal to noise(S/N ratio) is less 50 on the base of the noise when measured by X-ray diffraction from 10° to 60° at an interval of 0.01° and at a scanning rate of 1°/min to 16°/min.

7. Secondary battery comprising anode electrode which comprises the amorphous anode active material according to any one of Claims 1-6.

8. Secondary battery according to Claim 7, **characterized in that** the secondary battery further comprises,
Cathode containing at least one of Lithium metal oxide or Lithium metal phosphate;
Separator between the cathode and the anode; and
Electrolyte.

9. Secondary battery according to Claim 7, **characterized in that** the Lithium metal oxide in the cathode comprises at least one of LiCoO₂, LiNiO₂, LiMn₂O₄, Li(Ni_{1/3}Mn_{1/3}CO_{1/3})O₂, LiNiO_{0.5}Mn_{1.5}O₄ or LiNi_{0.5}Mn_{0.5}O₂ and the Lithium metal phosphate in the cathode comprises at least one of LiFePO₄, LiMnPO₄ or Li₃V₂((PO₄)₃).

10. Secondary battery according to any one of Claim 7 or claim 8, **characterized in that** the separator comprises at least one of polypropylene or polyethylene.

11. Secondary battery according to any one of Claim 7 or claim 8, **characterized in that** the electrolyte is an organic solvent where a Lithium salt is dissolved and the organic solvent comprises at least one of ethylene carbonate, propylene carbonate, diethyl carbonate, dimethyl carbonate, 1,2-dimethoxyethane, 1,2-diethoxyethane, γ-butyrolactone, tetrahydrifuran, 2-methyltetrahydrofuran, 1,3-dioxene, 4-methyl-1,3-dioxene, diethyl ether, sulfolane, ethyl methyl carbonate or butyronitrile and the Lithium salt comprises at least one of LiClO₄, LiCF₃SO_{3,} LiAsF₆, LiBF₄, LiN(CF₃SO₂)₂, LiPF₆, LiSCN, LiB(C₂O₄)₂ or LiN(SO₂C₂F₅)₂.

12. Hybrid capacitor comprising anode electrode which comprises the amorphous anode active material according to any one of Claims 1-6.

13. Method for preparing an electrode using an amorphous anode active material, **characterized in that** the electrode is prepared in steps of;
Preparing a paste by mixing the amorphous anode active material, a binder and a dispersion solution and the amorphous anode active material comprises at least one of metal oxide or metal phosphate;
Coating the paste on a current collector for the electrode; and
Drying the paste at a temperature of 50 to 200 .

14. Method for preparing an electrode according to Claim 13, **characterized in that** when preparing the paste, a conductive material is additionally mixed and the conductive material is at least one of carbon black, vapor grown carbon fiber or graphite in the form of powder and the conductive material is 1-30 parts by weight with respect of 100 parts by weight of the anode active material.

15. Method for preparing an electrode according to any one of Claim 13 or Claim 14, **characterized in that** the metal oxide is in the form of MOₓ(0 < X ≤ 3) and the M is at least one of Mo, V, Sc, Ti, Cr, Y, Zr, Nb or W and the metal phosphate is in the form of AₓB_{y}(PO₄) (0 ≤ x ≤ 2, 0 < y ≤ 2) and the A is at least one of Li, Na or K and the B is at least one of Mo, V, Sc, Ti, Cr, Y, Zr, Nb or W.

16. Method for preparing an electrode according to any one of Claim 13 or Claim 14, **characterized in that** the dispersion solution comprises at least one of N-Methyl Pyrrolidone(NMP), isopropyl alcohol, acetone or water and the binder comprises at least one of PolyTetraFluoroEthylene(PTFE), PolyVinyliDene Fluoride(PVDF), cellulose, Styrene Butadiene Rubber(SBR), polyimide, polyacrylic acid, PolyMethylMethAcrylate(PMMA) or PolyAcryloNitrile(PAN).

17. Method for preparing an electrode according to any one of Claim 13 or Claim 14, **characterized in that**, with respect of 100 parts by weight of the anode active material, the dispersion solution is 10 to 200 parts by weight and the binder is 3 to 50 parts by weight.

18. Method for preparing an electrode according to any one of Claim 13 or Claim 14, **characterized in that** the current collector is at least one of cupper, aluminum, stainless or nickel.
